# EUROPÄISCHE PATENTSCHRIFT

(11) **EP 4 103 457 B1**
(45) Veröffentlichungstag und Bekanntmachung des Hinweises auf die Patenterteilung: **13.12.2023**
(21) Anmeldenummer: 21703411.5
(22) Anmeldetag: 03.02.2021
(51) Int. Cl.: B62D 53/00, B62D 63/02

(54) **TRANSPORTSYSTEM FÜR DEN INNERBETRIEBLICHEN MATERIALFLUSS UMFASSEND EINEN ROUTENZUG UND MINDESTENS EINE ÜBERNAHMESTATION**
TRANSPORT SYSTEM FOR IN-HOUSE MATERIAL FLOW, COMPRISING A TUGGER TRAIN AND AT LEAST ONE TRANSFER STATION
SYSTÈME DE TRANSPORT POUR ACHEMINER DES MATÉRIAUX À L'INTÉRIEUR D'UN BÂTIMENT, COMPRENANT UN TRAIN LOGISTIQUE ET AU MOINS UN POSTE DE TRANSFERT

(30) Priorität: 13.02.2020 DE 102020103739
(43) Veröffentlichungstag der Anmeldung: 21.12.2022
(73) Patentinhaber: LR Intralogistik GmbH, 84109 Wörth a. d. Isar (DE)
(72) Erfinder: MOSCH, Christian, 84095 Furth (DE); BERGHAMMER, Fritz, 84028 Landshut (DE)
(74) Vertreter: Patentship Patentanwaltgesellschaft
(86) Internationale Anmeldenummer: PCT/EP2021/052474
(87) Internationale Veröffentlichungsnummer: WO 2021/160481

(56) Entgegenhaltungen:
- WO-A1-2016/063201
- WO-A1-2020/239375
- DE-U1-202018 103 943

## Beschreibung

Die Erfindung betrifft ein Transportsystem für den innerbetrieblichen Materialfluss umfassend einen Routenzug, der ein Zugfahrzeug und mindestens einen Routenzuganhänger aufweist, und mindestens eine Übernahmestation zur Übergabe von Lasten zwischen dem Routenzuganhänger und der Übernahmestation. Die Erfindung betrifft weiterhin ein Transportverfahren unter Verwendung eines derartigen Transportsystems.

Für den werksinternen Transport von Lasten, beispielsweise Paletten oder Gitterboxen zur Aufnahme von Ladungen, und somit den innerbetrieblichen Materialfluss werden in zunehmendem Umfang Routenzüge eingesetzt, deren Routenzuganhänger von einem Zugfahrzeug zu einer gewünschten Übernahmestationen verfahren werden.

Hierbei ist es bekannt, an Zielpositionen, an denen von dem Routenzuganhänger eine Last hintransportiert wird bzw. an einer Quellpositionen, an denen von dem Routenzuganhänger eine Last wegtransportiert wird, jeweils stationäre Übernahmestationen anzuordnen.

Eine derartiges Transportsystem mit einem Routenzug und stationären und somit ortsfesten Übernahmestationen an Zielpositionen und Quellpositionen ist aus der EP 3 150 522 B1 bekannt.

Bei derartigen Transportsystemen mit stationären und somit ortsfesten Übernahmestationen, die an den Zielpositionen bzw. Quellpositionen aufgestellt sind, ist nachteilig, dass mit dem Routenzug, der in der Regel eine Zugfahrzeug und mehrere angehängte Routenzuganhänger aufweist, die Zielpositionen bzw. Quellpositionen direkt angefahren werden müssen. Ein Routenzug wird hierbei in der Regel nur in der Vorwärtsfahrtrichtung betrieben und benötigt für eine Kurvenfahrt entsprechend breite Fahrwege. Zielpositionen bzw. Quellpositionen, an denen eine Last hinzutransportieren bzw. wegzutransportieren ist, die in einer Sackgasse angeordnet sind, an denen eine Hinfahrt in Vorwärtsfahrtrichtung und eine Rückfahrt in Rückwärtsfahrtrichtung erfolgt, oder Zielpositionen bzw. Quellpositionen, an denen eine Last hinzutransportieren bzw. wegzutransportieren ist, die an engen Stellen angeordnet sind, können mit bekannten Routenzügen nicht angefahren werden.

Die WO 2016/063201 A1 offenbart ein Verfahren in einem ersten Netzwerkgerät zum Anwenden von Quality-of-Service (QoS) auf eine virtuelle Schnittstelle über eine Mehrpfad-Transporttopologie.

Die DE 20 2018 103 943 U1 offenbart einen Dolly zum Transport eines Cargo-Containers auf dem Vorfeld eines Flughafens.

Der vorliegenden Erfindung liegt die Aufgabe zugrunde, ein Transportsystem der eingangs genannten Gattung zur Verfügung zu stellen und ein Transportverfahren zur Verfügung zu stellen, bei dem auch an Zielpositionen bzw. Quellpositionen eine Last hintransportiert bzw. eine Last wegtransportiert werden kann, die von dem Routenzug nicht angefahren werden können.

Diese Aufgabe wird durch ein Transportsystem gemäß Patentanspruch 1 und ein Transportverfahren gemäß Patentanspruch 6 gelöst.

Diese Aufgabe wird bei einem Transportsystem erfindungsgemäß dadurch gelöst, dass die Übernahmestation Bestandteil eines fahrerlosen Transportfahrzeugs ist und mittels des fahrerlosen Transportfahrzeugs verfahrbar ist.

Erfindungsgemäß ist somit die Übernahmestation mobil und verfahrbar, wozu ein fahrerloses Transportfahrzeug, ein sogenanntes FTS, vorgesehen ist. Ein fahrerloses Transportfahrzug ist ein flurgebundenes Transportfahrzeug, das einen eigenen Fahranrieb aufweist und automatisch gesteuert und geführt ist. Die Übernahmestation kann dabei auf dem fahrerlosen Transportfahrzeug fest aufgebaut sein, so dass das fahrerlose Transportfahrzeug mit der Übernahmestation dauernd verbunden ist und das fahrerlose Transportfahrzeug als mobile und verfahrbare Übernahmestation ausgebildet ist. Alternativ kann die Übernahmestation nur temporär Bestandteil des fahrerlosen Transportfahrzeugs sein und beispielsweise derart ausgebildet sein, dass die Übernahmestation von dem fahrerlosen Transportfahrzeug aufgenommen, verfahren und wieder abgesetzt werden kann.

Da ein mit einer Übernahmestation versehenen fahrerloses Transportfahrzeug eine aufgenommene Last sowohl in Vorwärtsfahrtrichtung als auch in Rückwärtsfahrtrichtung verfahren kann und gegenüber einem Routenzug schmälere Fahrwege benötigt, können mit dem mit einer Übernahmestation versehenen fahrerloses Transportfahrzeug auch Zielpositionen bzw. Quellpositionen angefahren werden, an denen eine Last hinzutransportieren bzw. wegzutransportieren ist, die in einer Sackgasse angeordnet sind, an denen eine Hinfahrt in Vorwärtsfahrtrichtung und eine Rückfahrt in Rückwärtsfahrtrichtung erfolgt, oder auch Zielpositionen bzw. Quellpositionen angefahren werden, an denen eine Last hinzutransportieren bzw. wegzutransportieren ist, die an engen Stellen angeordnet sind. Das erfindungsgemäße Transportsystem ermöglicht es somit in einfacher Weise, Lasten an Zielpositionen hinzutransportieren bzw. von Quellpositionen wegzutransportieren, die von dem Routenzug nicht direkt angefahren werden können.

Gemäß einer vorteilhaften Ausführungsform der Erfindung ist der Routenzuganhänger mit einer Fördereinrichtung, insbesondere einer motorisch angetriebenen Rollenbahn oder einem motorisch angetriebener Bandförderer oder einer motorisch angetriebenen Förderkette, zur Lastübergabe einer Last versehen. Dadurch kann der Routenzuganhänger mittels der entsprechenden Fördereinrichtung eine Last automatisch an die Übernahmestation übergeben oder von der Übernahmestation aufnehmen. In Verbindung bei einem autonomen Routenzug kann dadurch ein vollautomatischer Betrieb erzielt wird. Die Fördereinrichtung des Routenzuganhängers kann als motorisch angetriebene Rollenbahn, als Bandförderer oder als Förderkette ausgebildet sein.

Gemäß einer vorteilhaften Ausführungsform der Erfindung ist die von dem fahrerlosen Transportfahrzeug verfahrbare Übernahmestation mit einer Fördereinrichtung, insbesondere einer motorisch angetriebenen Rollenbahn oder einem motorisch angetriebener Bandförderer oder einer motorisch angetriebenen Förderkette, zur Lastübergabe einer Last versehen. Dadurch kann das fahrerlose Transportfahrzeug mittels der entsprechenden Fördereinrichtung eine Last automatisch an den Routenzuganhänger übergeben oder von dem Routenzuganhänger aufnehmen. Die Fördereinrichtung des fahrerlosen Transportfahrzeugs kann als motorisch angetriebene Rollenbahn, als Bandförderer oder als Förderkette ausgebildet sein.

Gemäß einer vorteilhaften Ausgestaltungsform der Erfindung erfolgt die Übergabe einer Last in einer definierten Umschlagsposition, in der über Kontakte eine elektrische Verbindung zwischen dem Routenzuganhänger und der von dem fahrerlosen Transportfahrzeug verfahrbaren Übernahmestation erfolgt.

Der Routenzug kann durch einen Fahrer betrieben sein. Alternativ kann der Routenzug autonom und somit fahrerlos betrieben sein.

Die Aufgabe wird auch gelöst durch ein Transportverfahren unter Verwendung eines Transportsystems, wobei mit dem Routenzug an eine Umschlagposition gefahren wird, an der von dem fahrerlosen Transportfahrzeug eine Übernahmestation bereitgestellt wird, wobei in der Umschlagposition eine Übergabe einer Last zwischen dem Routenzuganhänger und der Übernahmestation durchgeführt wird, wobei mit dem fahrerlosen Transportfahrzeug eine auf der Übernahmestation befindliche Last von der Umschlagpositon zu einer Zielposition gefahren wird und/oder von einer Quellposition zu der Umschlagposition gefahren wird.

Beim Hintransport einer Last zu der Zielposition erfolgt somit mit dem Routenzug ein Transport der auf dem Routenzuganhänger befindlichen Last nur bis zu der Umschlagposition, an der ein fahrerloses Transportfahrzug mit einer Übernahmestation bereit gestellt ist. In der Umschlagposition wird dann die Last von dem Routenzuganhänger auf das fahrerlose Transportfahrzeug übergeben und somit von dem Routenzuganhänger das fahrerlose Transportfahrzeug beladen. Anschließend kann das fahrerlose Transportfahrzug die Last zur Zielposition weiter verfahren und transportieren.

Beim Wegtransport einer Last von einer Quellposition erfolgt zunächst der Transport der Last von der Quellposition zu der Umschlagposition durch das fahrerlose Transportfahrzug, wobei an der Umschlagposition ein Routenzug mit einem entsprechenden Routenzuganhänger bereit gestellt ist. In der Umschlagposition wird dann die Last von dem fahrerlosen Transportfahrzeug auf den Routenzuganhänger übergeben und somit von dem fahrerlosen Transportfahrzeug der Routenzuganhänger beladen. Anschließend kann der Routenzug die Last von der Übernahmeposition weiter wegverfahren. Beim Wegtransport einer Last von der Zielposition erfolgt somit mit dem Routenzug ein Transport der auf dem Routenzuganhänger befindlichen Last nur ab der Umschlagposition.

Bei dem erfindungsgemäßen Verfahren wird somit mit dem Routenzug die Last nur bis zur Umschlagposition bzw. ab der Umschlagposition transportiert. Der Transport der Last zwischen der Umschlagposition und der Zielposition bzw. zwischen der Quellposition und der Umschlagposition erfolgt mit dem fahrerlosen Transportfahrzeug.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Transportsystem in der Umschlagposition in einer perspektivischen Darstellung,
- Figur 2: das fahrerlose Transportfahrzug mit der Übernahmestation der Figur 1 in einer Seitenansicht,
- Figur 3: die Figur 1 nach der Lastübergabe von dem Routenzuganhänger auf das fahrerlose Transportfahrzeug,
- Figuren 4 bis 7: Stellungen des erfindungsgemäßen Transportsystems bei dem Transport der von dem fahrerlosen Transportfahrzeug aufgenommenen Last zu einer Zielposition,

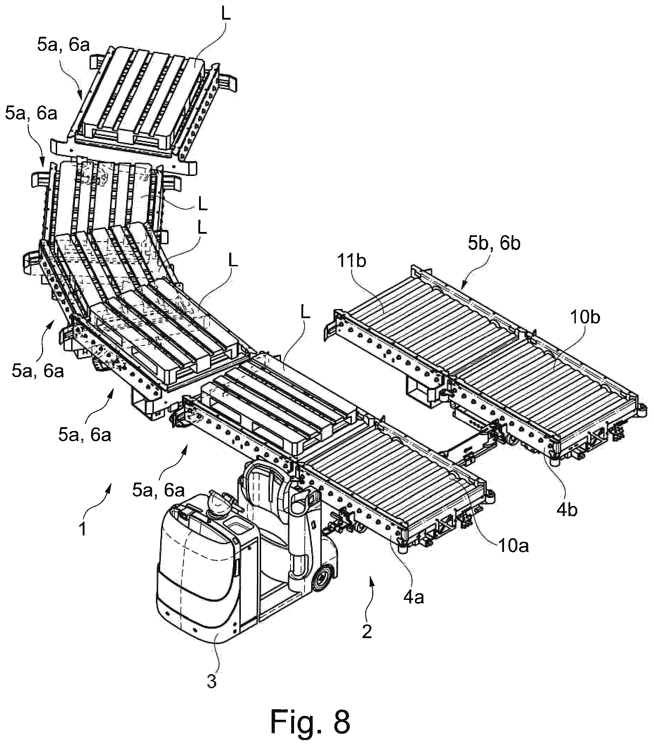

- Figur 8: die Figuren 3 bis 7 in einer überlagerten Darstellung.

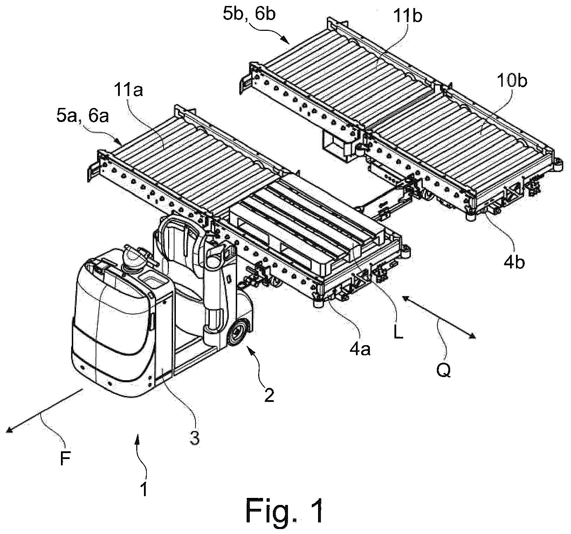

In der Figur 1 ist eine erfindungsgemäßes Transportsystem 1 für den innerbetrieblichen Materialfluss dargestellt. Das Transportsystem 1 umfasst einen Routenzug 2, der ein Zugfahrzeug 3 und mindestens einen Routenzuganhänger 4a, 4b aufweist, und mindestens eine Übernahmestation 5a, 5b zur Übergabe von Lasten L zwischen dem Routenzuganhänger 4a bzw. 4b und der Übernahmestation 5a bzw. 5b.

In der Figur 1 befindet sich der Routenzug 2 mit dem Routenzuganhänger 3a bzw. 3b in einer definierten Umschlagsposition relativ zu der entsprechenden Übernahmestation 5a bzw. 5b. In der definierten Umschlagposition befindet sich der entsprechende Routenzuganhänger 4a, 4b - wie in der Figur 1 dargestellt ist - in einem vorgegebene Abstand seitlich neben der entsprechenden Übernahmestation 5a, 5b, so dass die entsprechende Last L in seitlicher Richtung Q von dem Routenzuganhänger 4a bzw. 4b auf die entsprechende Übernahmestation 5a bzw. 5b bewegt werden kann bzw. von der Übernahmestation 5a bzw. 5b auf den Routenzuganhänger 4a bzw. 4b bewegt werden kann. Die Last L ist im dargestellten Ausführungsbeispiel als Ladungsträger in Form einer Palette ausgeführt.

Der Routenzug 2 ist bevorzugt autonom betrieben. Das Zugfahrzeug 3 ist hierzu von einem fahrerlosen Schlepper gebildet, an den die Routenzuganhänger 4a, 4b angehängt sind. Der autonome Routenzug 2 fährt mittels einer geeigneten, nicht näher dargestellten Sensorvorrichtung in einer Fahrtrichtung F.

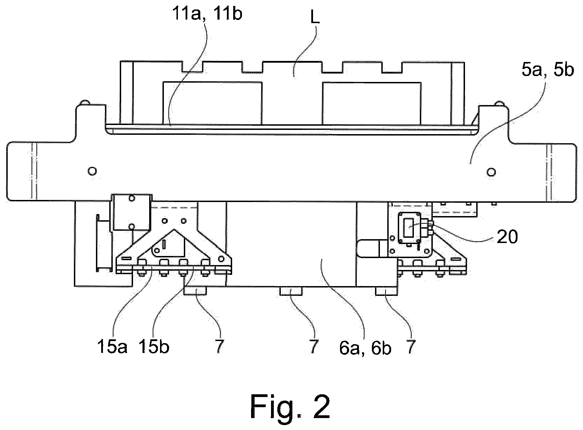

Erfindungsgemäß ist die Übernahmestation 5a, 5b - wie in Verbindung mit der Figur 2 ersichtlich ist - Bestandteil eines fahrerlosen Transportfahrzeugs 6a, 6b und somit mittels des fahrerlosen Transportfahrzeugs 6a, 6b verfahrbar. Die Figur 2 zeigt eine Seitenansicht des mit der Übernahmestation 5a, 5b versehenen fahrerlosen Transportfahrzeugs 6a, 6b auf die dem Trailerzuganhänger 4a, 4b zugewandten Seite.

Wie aus der Figur 2 ersichtlich ist, kann hierzu die Übernahmestation 5a, 5b auf das fahrerlose Transportfahrzeug 6a, 6b aufgebaut sein, so dass das fahrerlose Transportfahrzug 6a, 6b als Übernahmestation 5a, 5b ausgebildet ist. Das fahrerlose Transportfahrzeug 6a, 6b ist hierbei als flaches Fahrzeug mit einem Räder 7 umfassenden Fahrwerk ausgeführt, auf dessen Oberseite die Übernahmestation 5a, 5b aufgebaut ist.

Jeder Routenzuganhänger 4a, 4b ist mit einer Fördereinrichtung 10a, 10b zur Lastübergabe der Last L versehen. Im dargestellten Ausführungsbeispiel ist die Fördereinrichtung 10a, 10b als motorisch, beispielsweise mit einem Elektromotor, angetriebene Rollenbahn ausgebildet.

Die von dem fahrerlosen Transportfahrzeug 6a, 6b verfahrbare Übernahmestation 5a, 5b ist ebenfalls jeweils mit einer Fördereinrichtung 11a, 11b versehen. Im dargestellten Ausführungsbeispiel ist die Fördereinrichtung 11a, 11b als motorisch, beispielsweise mit einem Elektromotor, angetriebene Rollenbahn ausgebildet.

Die Übernahmestation 5a, 5b und somit das fahrerlose Transportfahrzeug 6a, 6b ist jeweils mit elektrischen Kontakten 15a, 15b versehen, die in der in der Figur 1 dargestellten definierten Umschlagposition mit entsprechenden Gegenkontakten des Routenzuganhängers 4a, 4b kontaktierbar sind. Die Fördereinrichtung 10a des Routenzuganhängers 4a und die Fördereinrichtung 11a des fahrerlosen Transportfahrzeugs 6a können damit von einer gemeinsamen Stromquelle versorgt werden. Hierbei ist es möglich, dass eine Batterie des Routenzugs 2 die Fördereinrichtung 10a des Routenzuganhängers 4a und die Fördereinrichtung 11a des fahrerlosen Transportfahrzeugs 6a mit elektrischer Energie versorgt. Alternativ kann eine Batterie des fahrerlosen Transportfahrzeugs 6a die Fördereinrichtung 10a des Routenzuganhängers 4a und die Fördereinrichtung 11a des fahrerlosen Transportfahrzeugs 6a mit elektrischer Energie versorgen. Es versteht sich, dass mit entsprechenden Kontakten die Fördereinrichtung 10b des Routenzuganhängers 4b und die Fördereinrichtung 11b des fahrerlosen Transportfahrzeugs 6b von einer gemeinsamen Stromquelle versorgt werden können.

Weiterhin kann zwischen der Übernahmestation 5a, 5b und somit dem fahrerlosen Transportfahrzeug 6a, 6b und dem entsprechenden Routenzuganhänger 4a, 4b in der in der Figur 1 dargestellten definierten Umschlagposition mittels Kommunikationeinrichtungen 20 eine Datenverbindung erfolgen, mittels der Sensoren an der Übernahmestation 5a, 5b und Sensoren an dem Routenzuganhänger 4a, 4b miteinander kommunizieren können. Die Versorgung der Sensoren mit elektrischer Energie kann hierbei über die elektrischen Kontakten 15a, 15b erfolgen.

Mit den elektrischen Kontakten 15a, 15b und den Kommunikationeinrichtungen 20 kann somit in der definierten Umschlagposition eine gegenseitige Versorgung und Abfrage von Sensoren und elektrischen Antrieben des Routenzuganhängers 4a und der Übernahmestation 5a bzw. des Routenzuganhängers 4b und der Übernahmestation 5b erfolgen.

Im Folgenden wird der Hintransport einer Last L zu einer Zielposition mit dem erfindungsgemäßen Transportsystem 1 beschrieben. Die auf dem Routenzuganhänger 4a bzw. 4b befindliche Last L wird mit dem Routenzug 2 zu einer definierten Umschlagposition verfahren, an der ein entsprechendes fahrerloses Transportfahrzeug 6a, 6b mit aufgebauter Übernahmestation 5a, 5b bereit steht. Dies ist in der Figur 1 dargestellt. In der Figur 1 befindet sich die Last L auf dem Routenzuganhänger 4a und der Routenzuganhänger 4a befindet sich in der definierten Umschlagposition mit der an dem fahrerlosen Transportfahrzeug 6a angeordneten Übernahmestation 5a.

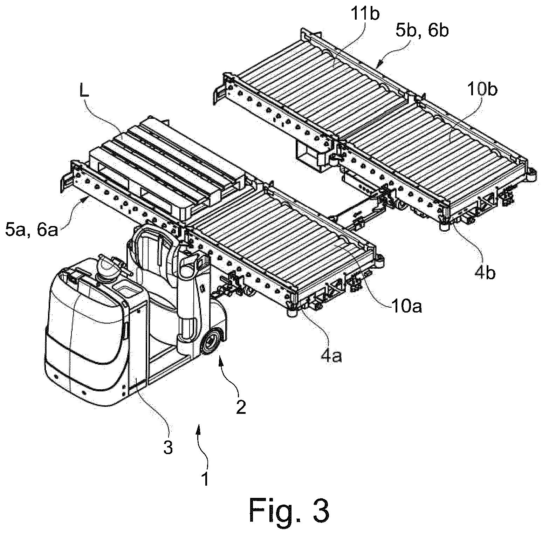

In einem darauffolgenden Schritt wird mittels der Fördereinrichtungen 10a, 11a die Last L von dem Routenzuganhänger 4a auf die Übernahmestation 5a und somit auf das fahrerlose Transportfahrzeug 6a bewegt, so dass der Routenzuganhänger 4a das fahrerlose Transportfahrzeug 6a mit der Last L belädt. Dies ist in der Figur 3 dargestellt.

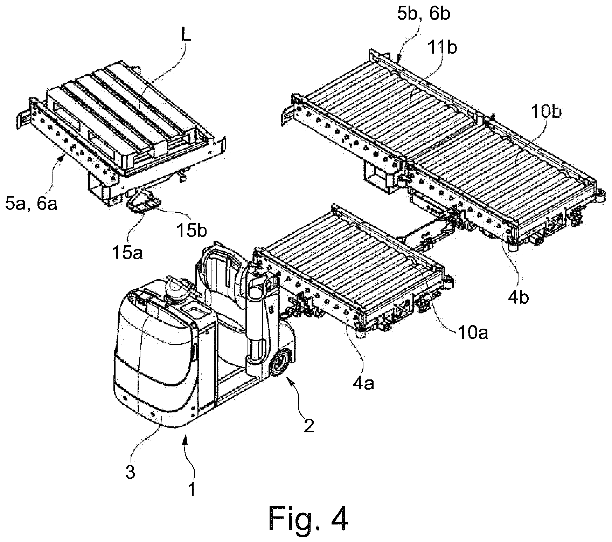

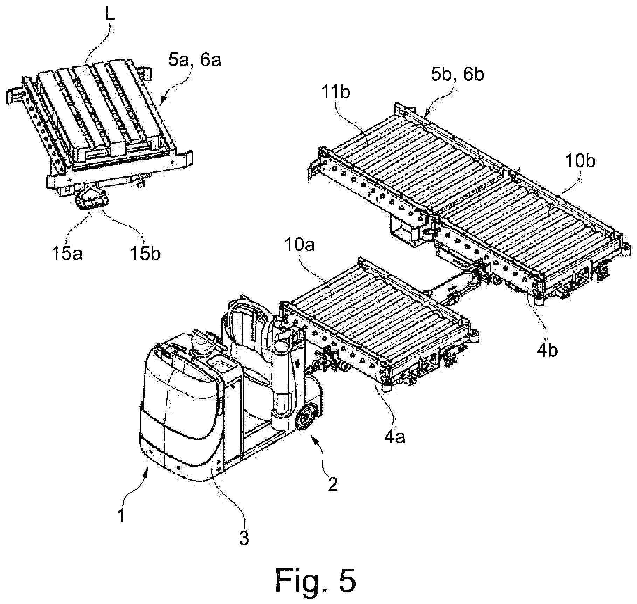

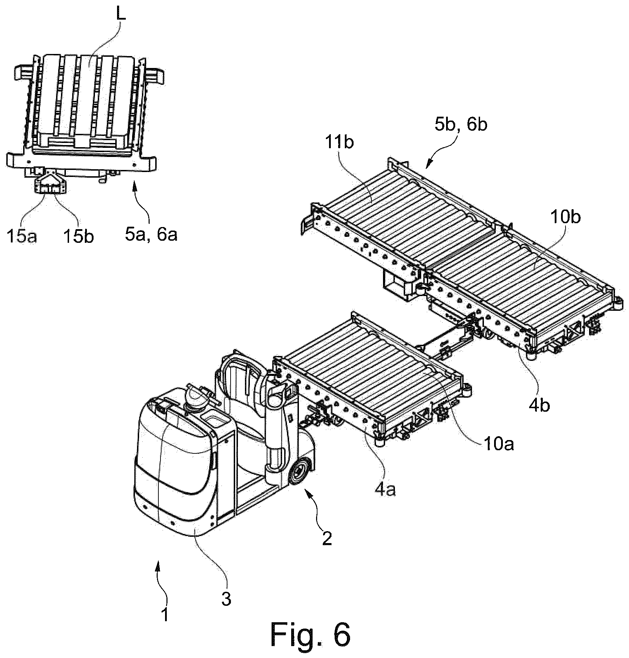

In einem anschließenden Schritt wird - wie aus den Figuren 4 bis 7 ersichtlich ist - die auf dem fahrerlosen Transportfahrzeug 6a befindliche Last L von dem fahrerlosen Transportfahrzeug 6a zu einer Zielposition verfahren.

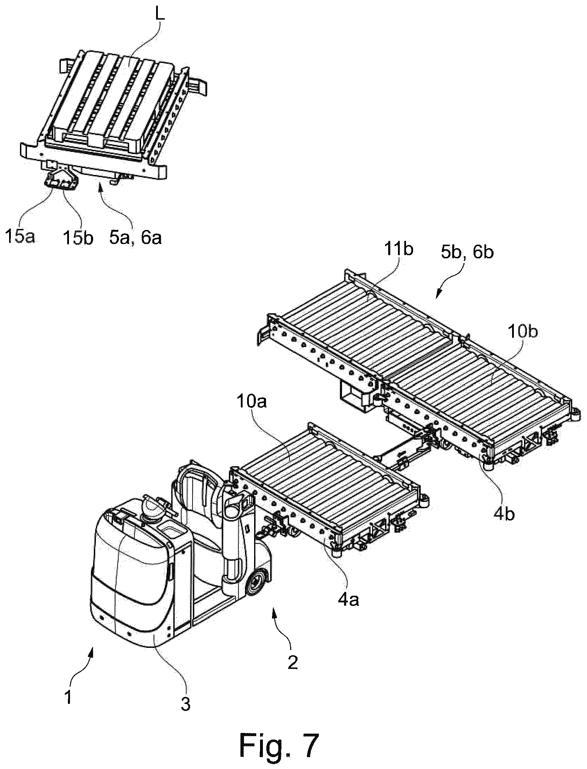

Im Folgenden wird der Wegtransport einer Last L von einer Quellposition mit dem erfindungsgemäßen Transportsystem 1 beschrieben. Die auf dem fahrerlosen Transportfahrzeug 6a befindliche Last L wird mit dem fahrerlosen Transportfahrzeug 6a von der Quellposition zu einer definierten Umschlagposition verfahren, an der ein Routenzug 2 mit entsprechenden Routenzuganhängern 4a, 4b bereit steht. Dies ist in den Figuren 7 bis 3 dargestellt, wobei die Figur 3 die definierte Umschlagposition zwischen dem fahrerlosen Transportfahrzeug 6a und dem Routenzuganhänger 4a zeigt.

In einem darauffolgenden Schritt wird mittels der Fördereinrichtungen 11a, 10a die Last L von dem fahrerlosen Transportfahrzeug 6a auf den Routenzuganhänger 4a bewegt, so dass das fahrerlose Transportfahrzeug 6a den Routenzuganhänger 4a mit der Last L belädt. Dies ist in der Figur 1 dargestellt.

In einem anschließenden Schritt kann die auf dem Routenzuganhänger 4a befindliche Last L von dem Routenzug 2 weiter transportiert werden.

Die Übergabe der Last L zwischen dem Routenzuganhänger 4a, 4b und somit dem Routenzug 2 einem mit einer Übernahmestation 5a, 5b, beispielsweise einer Rollenbahn, versehenen fahrerlosen Transportfahrzeug 6a, 6b ermöglicht es somit, die Last L zu einer Zielposition hinzutransportieren bzw. von einer Quellposition wegzutransportieren und somit Zielpositionen und Quellpositionen zu erreichen, die mit dem Routenzug 2 nicht direkt angefahren werden können.

## Patentansprüche

1. Transportsystem (1) für den innerbetrieblichen Materialfluss umfassend einen Routenzug (2), der ein Zugfahrzeug (3) und mindestens einen Routenzuganhänger (4a; 4b) aufweist, und mindestens eine Übernahmestation (5a; 5b) zur Übergabe von Lasten (L) zwischen dem Routenzuganhänger (4a; 4b) und der Übernahmestation (5a; 5b), **dadurch gekennzeichnet, dass** die Übernahmestation (5a; 5b) Bestandteil eines fahrerlosen Transportfahrzeugs (6a; 6) ist und mittels des fahrerlosen Transportfahrzeugs (6a; 6b) verfahrbar ist.

2. Transportsystem nach Anspruch 1, **dadurch gekennzeichnet, dass** der Routenzuganhänger (4a; 4b) mit einer Fördereinrichtung (10a ;10b), insbesondere einer motorisch angetriebenen Rollenbahn oder einem motorisch angetriebener Bandförderer oder einer motorisch angetriebenen Förderkette, zur Lastübergabe einer Last (L) versehen ist.

3. Transportsystem nach Anspruch 1 oder 2, **dadurch gekennzeichnet, dass** die von dem fahrerlosen Transportfahrzeug (6a; 6b) verfahrbare Übernahmestation (mit einer Fördereinrichtung, insbesondere einer motorisch angetriebenen Rollenbahn oder einem motorisch angetriebener Bandförderer oder einer motorisch angetriebenen Förderkette, zur Lastübergabe einer Last (L) versehen ist.

4. Transportsystem nach einem der Ansprüche 1 bis 3, **dadurch gekennzeichnet, dass** die Übergabe einer Last (L) zwischen dem Routenzuganhänger (4a; 4b) und der Übernahmestation (5a; 5b) in einer definierten Umschlagsposition erfolgt, in der über Kontakte (15a; 15b) eine elektrische Verbindung zwischen dem Routenzuganhänger (4a; 4b) und der von dem fahrerlosen Transportfahrzeug (6a; 6b) verfahrbaren Übernahmestation (5a; 5b) erfolgt.

5. Transportsystem nach einem der Ansprüche 1 bis 4, **dadurch gekennzeichnet, dass** der Routenzug (2) durch einen Fahrer oder autonom betrieben ist.

6. Transportverfahren unter Verwendung eines Transportsystems nach einem der Ansprüche 1 bis 5, wobei mit dem Routenzug (2) an eine Umschlagsposition gefahren wird, an der von dem fahrerlosen Transportfahrzeug (6a; 6b) eine Übernahmestation (5a; 5b) bereitgestellt wird, wobei in der Umschlagposition eine Übergabe einer Last (L) zwischen dem Routenzuganhänger (4a; 4b) und der Übernahmestation (5a; 5b) durchgeführt wird, wobei mit dem fahrerlosen Transportfahrzeug (6a; 6b) eine auf der Übernahmestation (5a; 5b) befindliche Last von der Umschlagposition zu einer Zielposition gefahren wird und/oder von einer Quellposition zu der Umschlagposition gefahren wird.

## Claims

1. Transport system (1) for in-house material flow, comprising a tugger train (2) which has a towing vehicle (3) and at least one tugger train trailer (4a; 4b), and at least one transfer station (5a; 5b) for the transfer of loads (L) between the tugger train trailer (4a; 4b) and the transfer station (5a; 5b), **characterized in that** the transfer station (5a; 5b) is a component of a driver-less transport vehicle (6a; 6b) and is movable by means of the driver-less transport vehicle (6a; 6b).

2. Transport system according to Claim 1, **characterized in that** the tugger train trailer (4a; 4b) is provided with a conveying apparatus (10a; 10b), in particular a motor-driven roller conveyor or a motor-driven belt conveyor or a motor-driven conveyor chain for the load transfer of a load (L).

3. Transport system according to Claim 1 or 2, **characterized in that** the transfer station which can be moved by the driver-less transport vehicle (6a; 6b) is provided with a conveying apparatus (10a; 10b), in particular a motor-driven roller conveyor or a motor-driven belt conveyor or a motor-driven conveyor chain for the load transfer of a load (L).

4. Transport system according to any one of Claims 1 to 3, **characterized in that** the transfer of a load (L) between the tugger train trailer (4a; 4b) and the transfer station (5a; 5b) is performed at a defined transshipment position at which an electrical connection is produced between the tugger train trailer (4a; 4b) and the transfer station (5a; 5b) which can be moved by the driver-less transport vehicle (6a; 6b) via contacts (15a; 15b) .

5. Transport system according to any one of Claims 1 to 4, **characterized in that** the tugger train (2) is operated by a driver or autonomously.

6. Transport method using a transport system according to any one of Claims 1 to 5, wherein driving is performed with the tugger train (2) to a transshipment position at which a transfer station (5a; 5b) is provided by the driver-less transport vehicle (6a; 6b), wherein a transfer of a load (L) between the tugger vehicle trailer (4a; 4b) and the transfer station (6a; 5b) is performed at the transshipment position, wherein a load located on the transfer station (5a; 5b) is driven from the transshipment position to a target position and/or for a source position to the transshipment position with the driver-less transport vehicle (6a; 6b).

## Revendications

1. Système de transport (1) destiné au flux de matériaux spécifique à une entreprise, ledit système de transport comprenant un train de remorques (2) qui comporte un véhicule tracteur (3) et au moins une remorque de train de remorques (4a ; 4b), et au moins une station de transfert (5a ; 5b) destinée au transfert de charges (L) entre la remorque de train de remorques (4a ; 4b) et la station de transfert (5a ; 5b), **caractérisé en ce que** la station de transfert (5a ; 5b) fait partie d'un véhicule de transport sans conducteur (6a; 6) et peut être déplacé au moyen du véhicule de transport sans conducteur (6a ; 6b).

2. Système de transport selon la revendication 1, **caractérisé en ce que** la remorque de train de remorques (4a ; 4b) est munie d'un dispositif de transport (10a ; 10b), notamment d'un convoyeur à rouleaux motorisé ou d'un convoyeur à bande motorisé ou d'une chaîne de transport motorisée, destiné au transfert d'une charge (L) .

3. Système de transport selon la revendication 1 ou 2, **caractérisé en ce que** la station de transfert, qui peut être déplacée par le véhicule de transport sans conducteur (6a ; 6b), est munie d'un dispositif de transport, notamment d'un convoyeur à rouleaux motorisé ou d'un convoyeur à bande motorisé ou d'une chaîne de transport motorisée, destiné au transfert d'une charge (L) .

4. Système de transport selon l'une des revendications 1 à 3, **caractérisé en ce que** le transfert d'une charge (L) entre la remorque de train de remorques (4a ; 4b) et la station de transfert (5a ; 5b) est effectué dans une position de transbordement définie dans laquelle une liaison électrique est établie par le biais de contacts (15a ; 15b) entre la remorque de train de remorques (4a ; 4b) et la station de transfert (5a ; 5b) qui peut être déplacée par le véhicule de transport sans conducteur (6a ; 6b).

5. Système de transport selon l'une des revendications 1 à 4, **caractérisé en ce que** le train de remorques (2) est utilisé par le biais d'un conducteur ou de manière autonome.

6. Procédé de transport utilisant un système de transport selon l'une des revendications 1 à 5, le train de remorques (2) étant amené à une position de transbordement dans laquelle une station de transfert (5a ; 5b) est fournie par le véhicule de transport sans conducteur (6a ; 6b), une charge (L) étant transférée, dans la position de transbordement, entre la remorque de train de remorques (4a ; 4b) et la station de transfert (5a ; 5b), le véhicule de transport sans conducteur (6a ; 6b) amenant une charge, située au niveau de la station de transfert (5a ; 5b), de la position de transbordement à une position cible et/ou d'une position source à la position de transbordement.
